(19) Europäisches Patentamt
European Patent Office
Office européen des brevets

(11) **EP 2 154 620 A1**

(12) **EUROPEAN PATENT APPLICATION**

(43) Date of publication:
**17.02.2010 Bulletin 2010/07**

(51) Int Cl.:
***G06F 17/50*** *(2006.01)*

(21) Application number: **09167517.3**

(22) Date of filing: **07.08.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(30) Priority: **08.08.2008 IT MI20081510** | (71) Applicant: **Ansaldo Energia S.p.A.**<br>**Genova (IT)**<br><br>(72) Inventor: **Dacca', Federico**<br>**16138 Genova (IT)**<br><br>(74) Representative: **Jorio, Paolo et al**<br>**Studio Torta S.r.l.**<br>**Via Viotti 9**<br>**10121 Torino (IT)** |

(54) **Method and device for designing a turbine element**

(57) A method for designing a turbine element designed to guide a fluid evolving in the turbine envisages:
- defining a plurality of geometrical profiles of a section of the turbine element;
- calculating, for each geometrical profile, a plurality of parameters comprising fluid-dynamic parameters of the turbine element; the fluid-dynamic parameters comprising at least one parameter indicating a flow velocity along a geometrical profile of the section of the turbine element;
- calculating, for each geometrical profile, a value of an objective function ($F_O$) on the basis of the plurality of parameters; and
- calculating, by means of genetic algorithms, a new plurality of geometrical profiles that optimize the objective function ($F_O$).

Fig. 2

**Description**

The present invention relates to a method and device for designing a turbine element. Specifically, the present invention regards a method and a device for designing a turbine element adapted for guiding an evolving fluid in a turbine, in particular a blade of a turbine.

Known to the art are methods for designing turbine elements based upon algorithms of an inverse type, which determine a geometrical profile of at least one section of the turbine element starting from pre-defined conditions of flow of the evolving fluid, such as, for example, particular distributions of the static pressure, etc.

The above methods do not, however, enable imposition of the design specifications and of the constraints of a geometrical and/or mechanical type. Consequently, it is possible for the method to yield a geometrical profile of at least one section of a turbine element that presents the desired fluid-dynamic characteristics and that, on the other hand, presents, for example, unacceptable dimensions for the model of turbine considered or excessively low values of mechanical resistance.

Also known are methods for designing a turbine element that use optimization algorithms. Said methods enable determination of a geometrical profile of a cross section of a turbine element such as to respect the design specifications and the pre-determined constraints of a geometrical and mechanical type. However, said methods are unable to determine geometrical profiles that respect not only the constraints of a geometrical and mechanical type but also some design specifications of a fluid-dynamic type.

Both the methods based upon algorithms of an inverse type and the methods based upon optimization algorithms are unable to determine a geometrical profile of a turbine element, and in particular of a blade, such as to meet the design specifications and the constraints of a mechanical, geometrical, thermodynamic type, and also of a fluid-dynamic type.

An aim of the present invention is to provide a method that will be free from the drawbacks of the known art highlighted above. In particular, an aim of the invention is to provide a method that will be able to determine at least one geometrical profile of a turbine element capable of meeting all the design specifications and the constraints of a mechanical, geometrical, thermodynamic, and also fluid-dynamic type.

In accordance with the above aims, the present invention regards a method for designing a turbine element adapted for guiding an evolving fluid in a turbine; the method comprising the steps of:

- defining a plurality of geometrical profiles of a section of the turbine element;
- calculating, for each geometrical profile, a plurality of parameters comprising fluid-dynamic parameters of the turbine element;
- calculating, for each geometrical profile, a respective value of an objective function on the basis of the plurality of parameters;
- calculating, by genetic algorithms, a new plurality of geometrical profiles which optimize the objective function; the method being **characterized in that** the fluid-dynamic parameters comprise at least one parameter indicative of a flow velocity along the geometrical profile of the section of the turbine element.

A further aim of the invention is to provide a device for designing a turbine element.

In accordance with the above aim, the present invention regards a device for designing a turbine element adapted for guiding an evolving fluid in a turbine; the device comprising:

- a parameter-calculation module for calculating a plurality of parameters comprising fluid-dynamic parameters of the turbine element for each geometrical profile of a plurality of geometrical profiles of a section of the turbine element;
- an objective-function-calculation module for calculating, for each geometrical profile of the plurality of geometrical profiles, a respective value of an objective function on the basis of the plurality of parameters; and
- a recombination and selection module for calculating, by means of genetic algorithms, a new plurality of geometrical profiles which optimize the objective function;

the device being **characterized in that** the fluid-dynamic parameters comprise at least one parameter indicative of a flow velocity along the geometrical profile of the section of the turbine element.

Further characteristics and advantages of the present invention will emerge clearly from the ensuing description of a non-limiting example of embodiment thereof, with reference to the figures of the annexed drawings, wherein:

- Figure 1 is a simplified block diagram of a device for designing a turbine element according to the present invention; and
- Figure 2 is a simplified flowchart regarding the method for designing a turbine element according to the present invention.

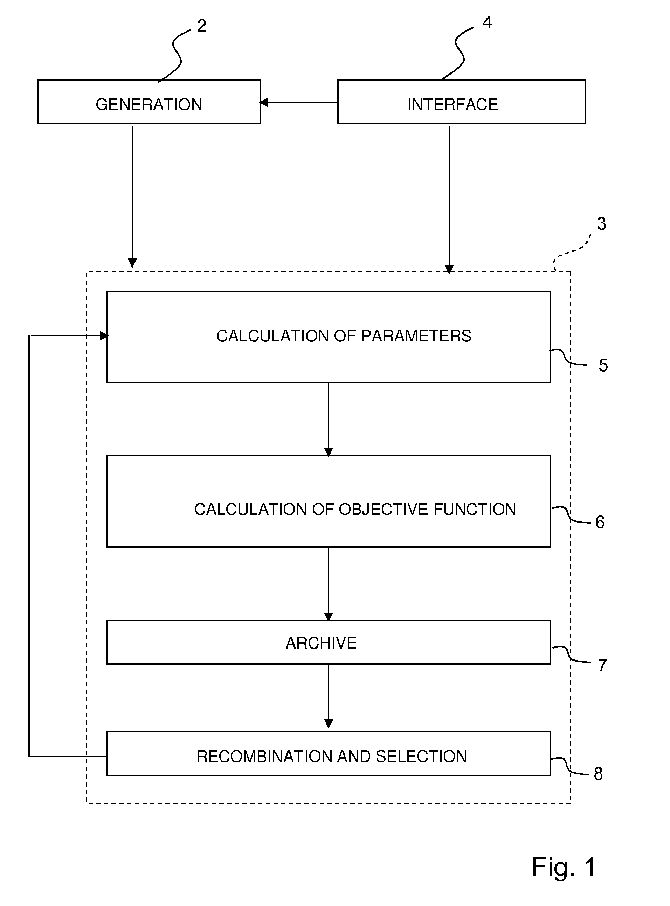

Figure 1 shows a device 1 for designing a turbine element (not illustrated in the attached figures), which is adapted for guiding the evolving fluid in the turbine. In the non-limiting example described and illustrated herein, the device 1 is configured to design of the blade of a turbine, for example a rotor blade or a stator blade of a compressor, etc.

The device 1 is configured to calculate geometrical profiles of the blade, starting from which it is possible to obtain, for example via interpolation, the geometry of the blade itself. Hereinafter by the term "geometrical profile" is understood the boundary of a section of the blade obtained by sectioning the blade with a so-called "interblade" plane, which extends along a circumference centred on the axis of the turbine. Normally, for determination of the geometry of the blade at least three geometrical profiles relating to three different sections of the blade are necessary. In the case where a greater precision in designing the blade is called for, the geometry of the blade is obtained starting from a larger number of geometrical profiles, for example relating to ten different sections of the blade.

The device 1 comprises a generation module 2, an optimization module 3, and an interface 4 in communication with the generation module 2 and the optimization module 3.

The generation module 2 is substantially configured to define a plurality of geometrical profiles of a section of the turbine element.

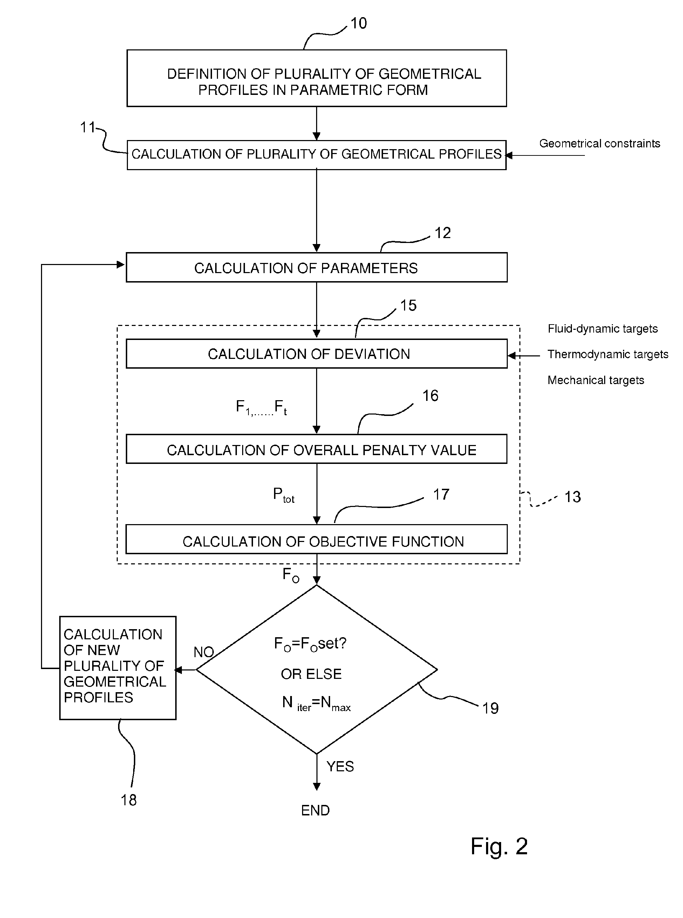

In particular, the process implemented by the generation module 2 substantially envisages defining a plurality of geometrical profiles in parametric form of a section of the blade (see block 10 of Figure 2) and calculating, on the basis of pre-defined geometrical constraints, a plurality of geometrical profiles of the section of the blade starting from the plurality of geometrical profiles in parametric form of the section of the blade (see block 11 of Figure 2).

The plurality of geometrical profiles in parametric form can be defined in a random way or else can be defined a priori, completely or in part, by an operator through the interface 4, for example by entering geometrical profiles of already existing blades.

The geometrical constraints are pre-defined and can be modified by an operator by means of the interface 4.

The optimization module 3 substantially calculates, on the basis of values of thermodynamic, mechanical, and fluid-dynamic parameters calculated for each geometrical profile, a new plurality of geometrical profiles by means of optimization algorithms of a genetic type.

The optimization algorithms of a genetic type are search algorithms that are drawn from the mechanisms of natural selection in a population of individuals. More precisely, given a plurality of parameters with values that may vary within pre-determined domains, the genetic algorithms enable selection of combinations of values of the parameters that maximize an objective function, pre-constituted on the basis of the type of parameters and the objective that it is intended to obtain by means of optimization.

The individuals are vectors that contain specific combinations of values of the parameters. Consequently, associated to each individual is a respective value of the objective function. The values of the parameters of each individual are normally encoded in a binary format and each (binary) digit represents a gene. The genes of each individual are aggregated in chromosomes, i.e., sequences of pre-determined length.

Once the individuals have been defined, the genetic algorithm envisages mechanisms of reproduction, based upon recombination of the chromosomes of the individuals of the population, and mutation of the values of the genes, and mechanisms of competition and selection, substantially based upon the value of the objective function associated to the individuals of the population (in practice, in each new generation there survive only the individuals to which highest values of the objective function are associated). The process is applied iteratively, generally up to convergence on a population of individuals that maximize the objective function. The values of the parameters that form the selected individuals yield the solution sought.

Consequently, starting from an initial population (a plurality of geometrical profiles of one and the same section of the blade defined by the generation module 2), the optimization module 3 produces iteratively a new generation of individuals (a new plurality of geometrical profiles) up to maximization of the objective function.

In practice, the convergence of the genetic algorithm towards individuals that maximize the objective function guarantees that the values of the thermodynamic, mechanical, and fluid-dynamic parameters of a plurality of geometrical profiles that respond more closely to the criterion of optimization chosen will be selected.

For the definition of the geometry of the blade it is necessary to select one of the geometrical profiles of the section of the blade from the new plurality of geometrical profiles calculated by the optimization module 3. Said selection of the geometrical profile can be made automatically, for example by selecting the geometrical profile that has the highest objective function, or else manually by an operator.

In detail, the optimization module 3 comprises a parameter-calculation module 5, an objective-function-calculation module 6, a archive module 7, and a recombination and selection module 8.

The parameter-calculation module 5 calculates the values of the mechanical, thermodynamic, and fluid-dynamic parameters of each geometrical profile of the plurality of geometrical profiles that it receives at input (see block 12 of Figure 2).

Amongst the mechanical parameters preferably included are the moments of inertia, the resistance to bending, the surface defined by the geometrical profile, etc.

Amongst the thermodynamic parameters preferably included are the coefficient of heat exchange on the surface of the blade, the losses of kinetic energy, etc.

Amongst the fluid-dynamic parameters preferably included are the flow velocity along the geometrical profile of the blade (by "flow velocity " is meant the velocity of the fluid evolving in the turbine along the geometrical profile of the blade), the flow angle at the output of the blade, Mach number along the geometrical profile of the blade (by "Mach number" is understood the ratio between the local velocity of the fluid evolving in the turbine and the velocity of the sound measured in the same point), etc. Preferably, the fluid-dynamic parameters are calculated by means of fluid-dynamic methods of calculation of the so-called "blade-to-blade" type.

The objective-function-calculation module 6 determines, starting from the plurality of parameters calculated by the parameter-calculation module 5, a value of an objective function $F_o$ for each geometrical profile of the plurality of geometrical profiles.

With reference to the flowchart of Figure 2, the block designated by the reference number 13 represents the operation of the objective-function-calculation module 6. In particular, the calculation process performed by the objective-function-calculation module 6 envisages the following steps:

- determining deviation values $F_1, ...F_t$ of the plurality of parameters from respective reference values (block 15);
- calculating, on the basis of said deviation values $F_1, ...F_t$, an overall penalty value $P_{TOT}$ (block 16); in particular, the overall penalty value $P_{TOT}$ is calculated as a weighted addition of individual penalty values $P_1, ...P_t$ calculated on the basis of the respective deviations $F_1, ...F_t$ in accordance with the following formula:

$$P_{tot} = a_1 P_1 + a_2 P_2 + ... a_t F_t$$

where:

$$P_1 = f(F_1), \quad P_2 = f(F_2) ... \quad P_t = f(F_t)$$

The weights $a_1 ... a_t$ of each individual penalty value $P_1, ...P_t$ are pre-defined and can be set by the operator by means of the interface 4. In particular, a higher weight is attributed to the individual penalty values $P_1, ...P_t$ regarding those parameters that are deemed to have a necessarily significant effect in the design;

- calculating the objective function $F_O$ (block 17) as the reciprocal of the overall penalty value $P_{TOT}$ in accordance with the following formula:

$$F_O = \frac{1}{P_{tot}}$$

In particular, the individual penalty value $F_M$ regarding the Mach-number parameter is calculated, for each geometrical profile, in accordance with the following steps:

- selecting a pre-determined number NUM of points of the geometrical profile; preferably half of the points are selected along the pressure side of the blade and the remaining half along the suction side;
- calculating for each selected point of the geometrical profile, the deviation value $F_M(i)$ between a respective reference Mach number $Mach_{RIF}(i)$ and a respective calculated Mach number $Mach_{CAL}(i)$:

$$F_M(i) = Mach_{RIF}(i) - Mach_{CAL}(i)$$

- calculating the penalty value $P_M$ in accordance with the following formula

$$P_M = \frac{\left( \sum_{i=1}^{NUM} |F_M(i)| \right)^2}{NUM}$$

where $P_M$ is the individual penalty value, NUM is the pre-determined number of points of the geometrical profile, and the summation is extended to just the points that present a deviation value $F_M(i)$ higher than a respective threshold value S(i).

With reference to Figure 1, the archive module 7 stores, for each geometrical profile of the plurality of geometrical profiles, the combinations of values of the parameters and the corresponding value of the objective function $F_o$.

The recombination and selection module 8, starting from the data stored in the archive module 7, calculates by means of genetic algorithms a new plurality of geometrical profiles (block 18), which is supplied to the parameter-calculation module 5 in the case where the conditions of arrest of the iteration are not reached (block 19). The conditions of arrest of the iteration are reaching of a value of the pre-determined objective function $F_{Oset}$ established as the optimal value or else reaching of a maximum number of iterations $N_{max}$ in order to avoid prolongation of the process and avoid rendering the design excessively burdensome.

Advantageously, thanks to the device and method according to the present invention it is possible to determine a plurality of optimal geometrical profiles of a section of a turbine element. In particular, the plurality of geometrical profiles obtained are characterized by a fluid-dynamic behaviour, and in particular an evolution of the flow velocity, which approaches as closely as possible the desired one and at the same time is able to meet the desired mechanical and thermodynamic requirements.

Finally, it is clear that modifications and variations may be made to the device and to the method described herein, without thereby departing from the scope of the annexed claims.

## Claims

1.   Method for designing a turbine element adapted for guiding an evolving fluid in a turbine; the method comprising the steps of:

- defining a plurality of geometrical profiles of a section of the turbine element;
- calculating, for each geometrical profile, a plurality of parameters comprising fluid-dynamic parameters of the turbine element;
- calculating, for each geometrical profile, a respective value of an objective function (FO) on the basis of the plurality of parameters;
- calculating, by genetic algorithms, a new plurality of geometrical profiles which optimize the objective function (FO);

the method being **characterized in that** the fluid-dynamic parameters comprise at least one parameter indicative of a flow velocity along the geometrical profile of the section of the turbine element.

2.   Method according to Claim 1, **characterized in that** the parameter indicative of the flow velocity is the Mach number along the geometrical profile.

3.   Method according to Claim 1 or 2, **characterized in that** the plurality of parameters comprise parameters selected from the group consisting of mechanical, thermodynamic, geometric parameters and combinations thereof.

4.   Method according to anyone of the Claims from 1 to 3, **characterized in that** the step of calculating, for each geometrical profile, a respective value of the objective function (FO) comprises the steps of:

- determining deviation values (F1, ... Ft) of the plurality of parameters from respective reference values;
- calculating, on the basis of said deviation values (F1, ... Ft), the respective value of the objective function (FO).

5.   Method according to Claim 4, **characterized in that** the step of calculating, on the basis of said deviation values (F1, ... Ft), the respective value of the objective function (FO) comprises the steps of:

- calculating, on the basis of said deviation values (F1, ... Ft), an overall penalty value (Ptot);

- calculating the objective function value (FO) as the reciprocal of the overall penalty value (Ptot).

6.   Method according to Claim 5, **characterized in that** the step of calculating an overall penalty value (Ptot) comprises the steps of:

- calculating an individual penalty value (P1, ... Pt) for each parameter of the plurality of parameters on the basis of the respective deviation value (F1, ... Ft);
- carrying out a weighted addition of the individual penalty values (P1, ... Pt).

7.   Method according to Claim 6, **characterized in that** the step of determining deviation values (F1, ... Ft) of the plurality of parameters from respective reference values comprises the steps of:

- selecting a pre-determined number (NUM) of points of the geometrical profile;
- calculating, for each point of the geometrical profile, the deviation value (FM(i)) between a respective reference Mach number ($Mach_{RIF}(i)$) and a respective calculated Mach number ($Mach_{CAL}(i)$).

8.   Method according to Claim 7, **characterized in that** the step of calculating an individual penalty value (PM) comprise the step of calculating an individual penalty value (PM) according to the following formula:

$$P_M = \frac{\left( \sum_{i=1}^{NUM} |F_M(i)| \right)^2}{NUM}$$

where $P_M$ is the individual penalty value, NUM is the pre-determined number of points of the geometrical profile and the summation is extended only to points having a deviation value ($F_M(i)$) greater than a respective threshold value (S(i)).

9.   Device for designing a turbine element adapted for guiding an evolving fluid in a turbine; the device comprising:

a parameter calculation module (5) for calculating a plurality of parameters comprising fluid-dynamic parameters of the turbine element, for each geometrical profile of a plurality of geometrical profiles of a section of the turbine element;

an objective function calculation module (6) for calculating, for each geometrical profile of the plurality of geometrical profiles, a respective value of an objective function (FO) on the basis of the plurality of parameters;

a recombination and selection module (8) for calculating, by means of genetic algorithms, a new plurality of geometrical profiles which optimize the objective function (FO);

the device (1) being **characterized in that** the fluid-dynamic parameters comprise at least one parameter indicative of a flow velocity along the geometrical profile of the section of the turbine element.

Fig. 1

Fig. 2

| | Europäisches Patentamt European Patent Office Office européen des brevets | **EUROPEAN SEARCH REPORT** | **Application Number** EP 09 16 7517 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 881 155 A (ANSALDO ENERGIA SPA [IT]) 23 January 2008 (2008-01-23) the whole document, in particular paragraphs [0010] to [0015], [0029]-[0031] ----- | 1-9 | INV. G06F17/50 |
| Y | XIAOYONG QIN ET AL: "Optimization for a steam turbine stage efficiency using a genetic algorithm" APPLIED THERMAL ENGINEERING ELSEVIER UK, vol. 23, no. 18, December 2003 (2003-12), pages 2307-2316, XP002521956 ISSN: 1359-4311 the whole document ----- | 1-9 | |
| Y | KOINI G N ET AL: "A software tool for parametric design of turbomachinery blades" ADVANCES IN ENGINEERING SOFTWARE, ELSEVIER SCIENCE, OXFORD, GB, vol. 40, no. 1, 3 June 2008 (2008-06-03), pages 41-51, XP025468904 ISSN: 0965-9978 [retrieved on 2008-06-03] the whole document, in particular section 1. Introduction ----- | 1-9 | |
| | | | TECHNICAL FIELDS SEARCHED (IPC) G06F |
| A | SHIGERU OBAYASHI ET AL: "Multiobjective Genetic Algorithm Applied to Aerodynamic Design of Cascade Airfoils" IEEE TRANSACTIONS ON INDUSTRIAL ELECTRONICS, IEEE SERVICE CENTER, PISCATAWAY, NJ, USA, vol. 47, no. 1, 1 February 2000 (2000-02-01), XP011023621 ISSN: 0278-0046 the whole document ----- -/-- | 1-9 | |

The present search report has been drawn up for all claims

| Place of search | Date of completion of the search | Examiner |
|---|---|---|
| Munich | 23 October 2009 | Lerbinger, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 09 16 7517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ESKANDARI H ET AL: "Multiobjective Simulation Optimization Using an Enhanced Genetic Algorithm" WINTER SIMULATION CONFERENCE, 2005 PROCEEDINGS OF THE DEC. 4, 2005, PISCATAWAY, NJ, USA,IEEE, 4 December 2005 (2005-12-04), pages 833-841, XP010880585 ISBN: 978-0-7803-9519-0 the whole document, in particular Figure 1 ----- | 1-9 | |
| | | | **TECHNICAL FIELDS SEARCHED (IPC)** |

The present search report has been drawn up for all claims

| Place of search | Date of completion of the search | Examiner |
|---|---|---|
| Munich | 23 October 2009 | Lerbinger, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                   

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 16 7517

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2009

| Patent document cited in search report | | Publication date | Patent family member(s) | Publication date |
|---|---|---|---|---|
| EP 1881155 | A | 23-01-2008 | NONE | |

EPO FORM P0459

For more details about this annex : see Official Journal of the European Patent Office, No. 12/82